# EUROPEAN PATENT APPLICATION

(11) **EP 4 147 959 A1**
(43) Date of publication of application: **15.03.2023**
(21) Application number: 21914454.0
(22) Date of filing: 29.12.2021
(51) Int. Cl.: B62K 15/00

(54) **FOLDING JOINT AND FOLDING BICYCLE FRAME**

(30) Priority: 30.12.2020 CN 202023344033 U
(71) Applicant: Shenzhen Meidahang Technology Co., Ltd., Shenzhen, Guangdong 518100 (CN)
(72) Inventor: HON, David Tak Wei, Shenzhen, Guangdong 518100 (CN); ZHANG, Wenbin, Shenzhen, Guangdong 518100 (CN); HUANG, Dongming, Shenzhen, Guangdong 518100 (CN); HU, Shengping, Shenzhen, Guangdong 518100 (CN)
(74) Representative: Sun, Yiming
(86) International application number: PCT/CN2021/142296
(87) International publication number: WO 2022/143720

(57) **Abstract**

The present disclosure relates to a folding joint and a folding bicycle frame. The folding joint includes a hand lever, a first joint connected to a first connecting member, and a second joint connected to a second connecting member, where the hand lever is hinged to the first joint and/or the second joint. When the first joint and the second joint are in a closed position, the hand lever is rotated to a first position. When the first joint and the second joint are in a separated position, the hand lever is rotated to a second position. The hand lever is provided with a first engaging portion. When the hand lever is in the first position, the first engaging portion is configured to engage with a second engaging portion to restrict the first joint and the second joint to be in the closed position. To restrict the hand lever to the first position, it is only necessary to engage the first engaging portion with the second engaging portion. To release the restriction on the hand lever, it is only necessary to separate the first engaging portion from the second engaging portion. The present disclosure provides an easy-to-operate design, and avoids the complicated operation of repeatedly rotating a movable stopper or a movable clamp ring relative to a frame tube to lock and unlock the hand lever in the prior art.

## Description

### TECHNICAL FIELD

The present disclosure relates to the technical field of folding bicycles, and in particular to a folding joint and a folding bicycle frame.

### BACKGROUND

As a means of transportation, bicycles play an important role in people's daily life. In particular, folding bicycles have brought great convenience to people's lives. The folding bicycle switches between the folded and unfolded states through a folding joint. The folding joint generally includes a hand lever, and two joints that are respectively connected to two frame tubes. The hand lever is hinged to the joints. When the two joints are closed, the hand lever is rotated relative to the joints to a first position, such that the two frame tubes are in an unfolded state. When the two joints are separated, the hand lever is rotated relative to the joints to a second position, such that the two frame tubes are in a folded state.

Generally, the frame tube is provided with a movable stopper or a movable clamp ring. When the hand lever is in the first position, the movable stopper or the movable clamp ring restricts rotation of the hand lever, so as to prevent the frame tubes from being accidentally switched from the unfolded state to the folded state. When the hand lever needs to be switched from the first position to the second position, the movable stopper or the movable clamp ring is moved relative to the frame tubes to release the restriction on the hand lever.

According to the above locking manner of the hand lever, when the hand lever is rotated to the first position, the movable stopper or the movable clamp ring is required to be moved relative to the frame tubes so as to prevent accidental rotation of the hand lever. In addition, to release the restriction on the hand lever, it is necessary to rotate the movable stopper or the movable clamp ring again, which is complicate din operation.

### SUMMARY

In order to solve the problem of the complicated operation of the traditional hand lever locking and unlocking method, the present disclosure provides an easy-to-operate folding joint and a folding bicycle frame.

A folding joint includes a hand lever, a first joint connected to a first connecting member, and a second joint connected to a second connecting member. The hand lever is hinged to the first joint and/or the second joint. When the first joint and the second joint are in a closed position, the hand lever is rotated to a first position adjacent to the first connecting member or the second connecting member. When the first joint and the second joint are in a separated position, the hand lever is rotated to a second position.

The hand lever includes a pressure bar and a pull fastener. The pressure bar is hinged to the first joint and/or the second joint, and the pull fastener is hinged to the pressure bar. The pull fastener is provided with a first engaging portion. When the hand lever is in the first position, the first engaging portion is configured to engage with a second engaging portion provided on the first connecting member or the second connecting member to restrict the first joint and the second joint to be in the closed position.

When the hand lever is switched from the first position to the second position, the pull fastener is rotated relative to the pressure bar to separate the first engaging portion from the second engaging portion, and the pull fastener exerts a force on the pressure bar to drive the pressure bar to rotate.

In an embodiment, the hand lever further may include an elastic piece, and the elastic piece may be connected to the pressure bar and the pull fastener.

When the first engaging portion is engaged with the second engaging portion, the elastic piece may be elastically deformed to store an elastic force for engaging the first engaging portion with the second engaging portion.

In an embodiment, the hand lever further may include a second rotating shaft. The elastic piece may be a torsion spring. The second rotating shaft passes through the pressure bar and the pull fastener. The torsion spring may be sleeved outside the second rotating shaft, and the torsion spring may have one end abutting against the pull fastener and/or the first engaging portion and the other end abutting against the pressure bar.

The pull fastener may be rotatable relative to the pressure bar around an axis of the second rotating shaft. When the first engaging portion is engaged with the second engaging portion, the torsion spring may be elastically deformed to store the elastic force.

In an embodiment, the pressure bar may be provided with a first limiting portion and a second limiting portion at an interval. The pull fastener may be provided with a matching portion. A fitting groove runs through the matching portion, and the matching portion is positioned between the first limiting portion and the second limiting portion. The second rotating shaft passes through the first limiting portion, the matching portion and the second limiting portion in sequence. The torsion spring may be provided in the fitting groove and may have one end abutting against the first engaging portion.

In an embodiment, the elastic piece may be an elastic sheet. The pull fastener may include a connection portion and an operation portion that may be connected to each other. The connection portion may be hinged to the pressure bar. The first engaging portion may be provided on the operation portion. The elastic sheet may abut between the operation portion and the pressure bar.

In an embodiment, the pull fastener may include a connection portion and an operation portion that may be connected to each other. The connection portion may be hinged to the pressure bar, and the first engaging portion may be provided on the operation portion. An avoidance position may be formed between the connection portion and the operation portion for avoiding the pressure bar.

When the first engaging portion is separated from the second engaging portion, a suspended end portion of the pressure bar extends into the avoidance position, and the pull fastener may exert a force on the pressure bar through a wall of the avoidance position to drive the pressure bar to rotate.

In an embodiment, the first engaging portion may be a clamping hook or a clamping groove matched with the second engaging portion.

In an embodiment, the first joint or the second joint may be provided with a third engaging portion. The first engaging portion may be engaged with the third engaging portion to restrict the first joint and the second joint to be in the separated position. When the hand lever is switched from the second position to the first position, the pull fastener may be rotated relative to the pressure bar to separate the first engaging portion from the third engaging portion, and the pull fastener may exert a force on the pressure bar to drive the pressure bar to rotate to the first position.

In an embodiment, the first joint may be hinged to one end of the second joint away from the hand lever, and the hand lever may be hinged to one of the first joint and the second joint. The folding joint may include a connecting rod, and the connecting rod may have one end hinged to the hand lever and the other end hinged to the other of the first joint and the second joint.

A folding frame of a folding bicycle includes a first connecting member, a second connecting member, and the folding joint described in any one of the above paragraphs. The first connecting member is a first frame tube, and the second connecting member is a second frame tube. The second engaging portion is provided on the first frame tube or the second frame tube.

In the folding joint and the folding frame of the present disclosure, the hand lever is provided with the first engaging portion. When the hand lever is in the first position, the first engaging portion is configured to engage with a second engaging portion provided on the first connecting member or the second connecting member to restrict the first joint and the second joint to be in the closed position. Through the above arrangement, the hand lever can be restricted to the first position by only engaging the first engaging portion with the second engaging portion. To release the restriction on the hand lever, it is only necessary to separate the first engaging portion from the second engaging portion. The present disclosure provides an easy-to-operate design and avoids the complicated operation of repeatedly rotating a movable stopper or a movable clamp ring relative to a frame tube to lock and unlock the hand lever in the prior art.

### BRIEF DESCRIPTION OF THE DRAWINGS

FIG. 1 is a front view of a folding frame of a folding bicycle in an unfolded state according to an embodiment of the present disclosure;
FIG. 2 is an exploded view of the folding frame shown in FIG. 1;
FIG. 3 is an exploded view of a folding frame of a folding bicycle according to another embodiment of the present disclosure;
FIG. 4 is a sectional view of the folding frame shown in FIG. 1;
FIG. 5 is an exploded view of a folding frame of a folding bicycle according to another embodiment of the present disclosure;
FIG. 6 is a sectional view of the folding frame shown in FIG. 5 in an unfolded state;
FIG. 7 is a sectional view of the folding frame shown in FIG. 3 in an unfolded state; and
FIG. 8 is a sectional view of the folding frame shown in FIG. 3 in a folded state.

Reference Numerals. 100. folding frame; 10. folding joint; 11. hand lever; 111. pressure bar; 1111. first limiting portion; 1112. second limiting portion; 112. pull fastener; 1121. avoidance position; 1122. matching portion; 1123. fitting groove; 113. elastic piece; 114. second rotating shaft; 12. first joint; 121. accommodating cavity; 13. second joint; 14. first engaging portion; 15. first locking portion; 16. second locking portion; 17. third engaging portion; 18. connecting rod; 19. first rotating shaft; 110. third rotating shaft; 120. fourth rotating shaft; 130. screw; 20. first frame tube; 30. second frame tube; and 40. second engaging portion.

### DETAILED DESCRIPTION OF THE EMBODIMENTS

To make the above objectives, features and advantages of the present disclosure more apparent, the specific implementations of the present disclosure are described in detail below with reference to the drawings. Many details are provided in the following description in order for a thorough understanding of the present disclosure. However, the present disclosure may still be implemented in many other ways other than those described herein, and those skilled in the art may make similar improvements without departing from the spirit of the present disclosure. Therefore, the present disclosure is not limited to the specific embodiments disclosed below.

It should be understood that, in the description of the present disclosure, the terms such as "central", "longitudinal", "transverse", "long", "wide", "thick", "upper", "lower", "front", "back", "left", "right", "vertical", "horizontal", "top", "bottom", "inner", "outer", "clockwise", "anticlockwise", "axial", "radial" and "circumferential" are intended to indicate orientations shown in the drawings. It should be noted that these terms are merely intended to facilitate a simple description of the present disclosure, rather than to indicate or imply that the mentioned apparatus or elements must have the specific orientation or be constructed and operated in the specific orientation. Therefore, these terms may not be construed as a limitation to the present disclosure.

Moreover, the terms such as "first" and "second" are used only for the purpose of description and should not be construed as indicating or implying a relative importance, or implicitly indicating a quantity of the indicated technical features. Therefore, features defined by "first" and "second" may explicitly or implicitly include at least one of the features. In the description of the present disclosure, "multiple" means at least two, for example, two or three, unless otherwise clearly and specifically limited.

In the present disclosure, unless otherwise clearly specified, the terms such as "mounting", "interconnection", "connection" and "fixation" are intended to be understood in a broad sense. For example, the "connection" may be a fixed, removable, or integral connection. The "connection" may be a mechanical or electrical connection, a direct connection or indirect connection using a medium, or a communication or interaction between two elements. Those of ordinary skill in the art may understand the specific meanings of the above terms in the present disclosure based on specific situations.

In the present disclosure, unless otherwise explicitly stipulated, "a first feature is above or below a second feature" may indicate that "the first and second features are in direct contact" or "the first and second features are in indirect contact through an intermediate feature". In addition, when it is described that the first feature is "over", "above" and "on" the second feature, it indicates that the first feature is directly or obliquely above the second feature or an altitude of the first feature is higher than that of the second feature. When it is described that a first feature is "under", "below" or "beneath" a second feature, it indicates that the first feature is directly or obliquely under the second feature or that the first feature is lower than the second feature.

It should be noted that when a component is "fixed" or "provided" on the other component, the component may be fixed on the other component directly or via an intermediate component. When a component is connected with the other component, the component may be connected with the other component directly or via an intermediate component. The terms "vertical", "horizontal", "upper", "lower", "left", "right," and other similar expressions used herein are for illustrative purposes only, rather than to mean the only implementation.

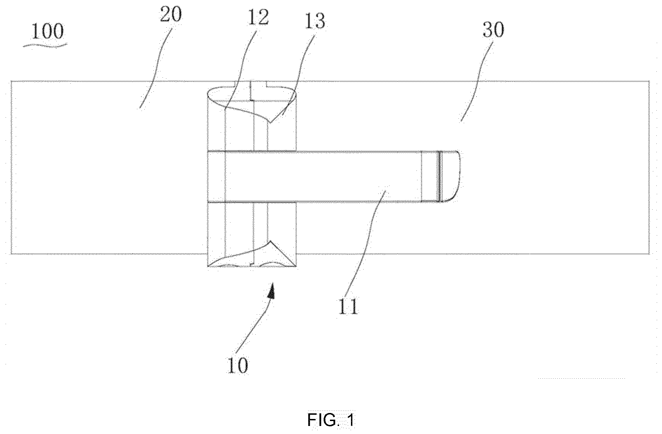

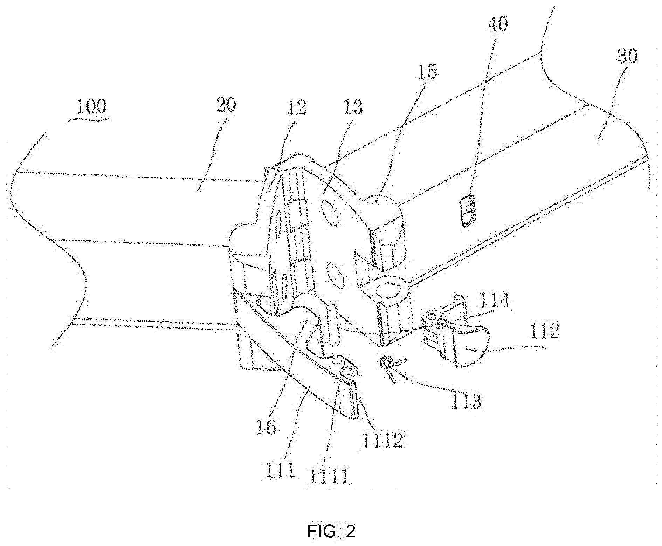

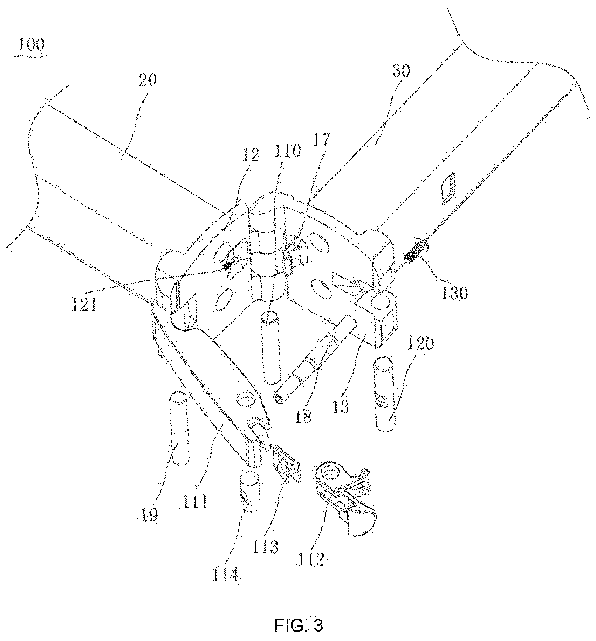

Referring to FIGS. 1 and 2, an embodiment of the present disclosure provides a folding frame 100 of a folding bicycle. The folding frame includes a folding joint 10. The folding joint 10 includes a hand lever 11, a first joint 12, and a second joint 13. The first joint 12 is connected to a first connecting member, and the second joint 13 is connected to a second connecting member. The hand lever 11 is hinged to the first joint 12 and/or the second joint 13. Specifically, the hand lever 11 is hinged to the first joint 12 and/or the second joint 13 through a first rotating shaft 19 (FIG. 3). When the first joint 12 and the second joint 13 are in a closed position, the hand lever 11 is rotated to a first position adjacent to the first connecting member 12 or the second connecting member 13, and the first connecting member and the second connecting member are in an unfolded state. When the first joint 12 and the second joint 13 are in a separated position, the hand lever 11 is rotated to a second position, and the first connecting member and the second connecting member are in a folded state.

It should be noted that when the folding joint 10 is applied to the folding frame 100 of a folding bicycle, the first connecting member is a first frame tube 20, and the second connecting member is a second frame tube 30. When the first joint 12 and the second joint 13 are in a closed position, the hand lever 11 is rotated to a first position adjacent to the first frame tube 20 or the second frame tube 30, and the first frame tube 20 and the second frame tube 30 are in an unfolded state. When the first joint 12 and the second joint 13 are in a separated position, the hand lever 11 is rotated to a second position, and the first frame tube 20 and the second frame tube 30 are in a folded state, that is, the folding frame 100 is in a folded state. It should be understood that, in other embodiments, the folding joint 10 may also be applied to other folding devices, which is not limited herein.

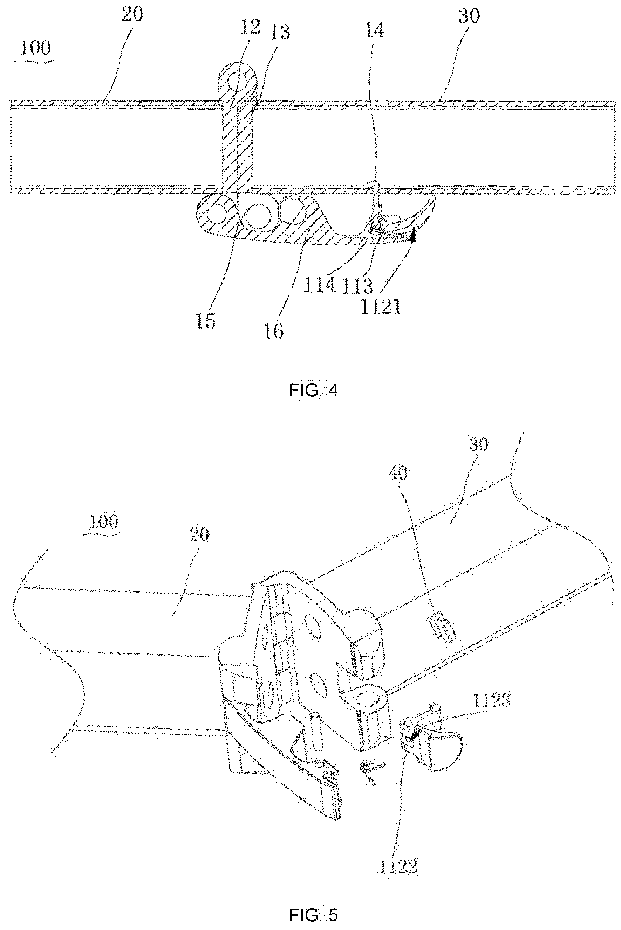

In an embodiment, the hand lever 11 is provided with a first engaging portion 14. When the hand lever 11 is in the first position, the first engaging portion 14 is configured to engage with a second engaging portion 40 provided on the first frame tube 20 or the second frame tube 30 (FIG. 4) to restrict the first joint 12 and the second joint 13 to be in the closed position. Through the above arrangement, the hand lever 11 can be restricted to the first position by only engaging the first engaging portion 14 with the second engaging portion 40. To release the restriction on the hand lever 11, it is only necessary to separate the first engaging portion 14 from the second engaging portion 40. The present disclosure provides an easy-to-operate design and avoids the complicated operation of repeatedly rotating the movable stopper or the movable clamp ring relative to the frame tube to lock and unlock the hand lever 11 in the prior art.

Further, the first joint 12 is hinged to one end of the second joint 13 away from the hand lever 11 through a third rotating shaft 110 (FIG. 3). The hand lever 11 is hinged to one of the first joint 12 and the second joint 13, and the other of the first joint 12 and the second joint 13 is provided with a first locking portion 15. The hand lever 11 is provided with a second locking portion 16 (FIG. 4). When the hand lever 11 is in the first position, the first locking portion 15 is locked with the second locking portion 16, and the first engaging portion 14 is engaged with the second engaging portion 40.

When the first joint 12 and the second joint 13 are in the closed position, the first locking portion 15 and the second locking portion 16 are locked with each other. In order to prevent the hand lever 11 from being accidentally rotated to leave the first position when the hand lever 11 is in the first position, the first engaging portion 14 is engaged with the second engaging portion 40. When the first engaging portion 14 and the second engaging portion 40 are separated, the hand lever 11 is rotated to the second position, and the first joint 12 and the second joint 13 are in the separated position.

It should be understood that, in other embodiments, the first joint 12 and the second joint 13 may also be switched between the closed position and the separated position in other ways, which are not limited herein.

Referring to FIG. 2, in an embodiment, the hand lever 11 includes a pressure bar 111 and a pull fastener 112. The pressure bar 111 is hinged to the first joint 12. The first locking portion 15 is provided on the second joint 13, and the second locking portion 16 is provided on the pressure bar 111. The pull fastener 112 is hinged to the pressure bar 111. The first engaging portion 14 is provided on the pull fastener 112, and the second engaging portion 40 is provided on the second frame tube 30. The pull fastener 112 is rotatable relative to the pressure bar 111 to engage the first engaging portion 14 with the second engaging portion 40.

To switch the hand lever 11 from the first position to the second position, the pull fastener 112 is held by hand to rotate relative to the pressure bar 111 to separate the first engaging portion 14 from the second engaging portion 40, and the pull fastener 112 exerts a force on the pressure bar 111 to drive the pressure bar 111 to rotate.

To switch the hand lever 11 from the second position to the first position, the first locking portion 15 is locked with the second locking portion 16. Then, the pull fastener 112 is rotated relative to the pressure bar 111 by a certain angle, such that the first engaging portion 14 and the second engaging portion 40 are engaged.

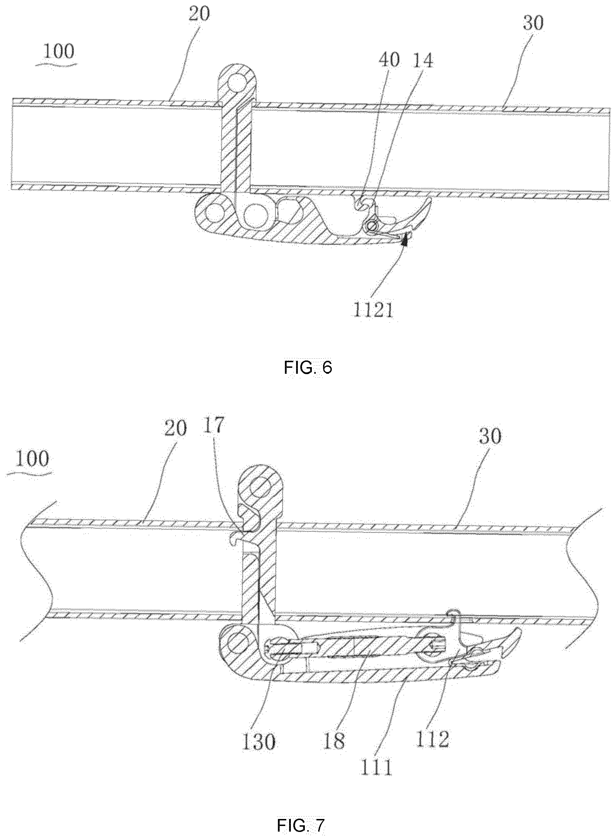

The pull fastener 112 includes a connection portion and an operation portion that are connected to each other. The connection portion is hinged to the pressure bar 111. The first engaging portion 14 is provided on the operation portion. An avoidance position 1121 (FIGS. 4 and 6) is formed between the connection portion and the operation portion for avoiding the pressure bar 111, such that the pressure bar 111 will not interfere with the pull fastener 112 that rotates relative to the pressure bar 111.

When the hand lever 11 is switched from the first position to the second position, a suspended end portion of the pressure bar 111 extends into the avoidance position 1121. The pull fastener 112 exerts a force through a wall of the avoidance position 1121 to rotate the pressure bar 111, thereby separating the first joint 12 from the second joint 13.

Referring to FIGS. 2 and 4, the hand lever 11 further includes an elastic piece 113. The elastic piece 113 is connected to the pressure bar 111 and the pull fastener 112. When the first engaging portion 14 is engaged with the second engaging portion 40, the elastic piece 113 is elastically deformed to store an elastic force for engaging the first engaging portion 14 with the second engaging portion 40. The elastic piece 113 ensures a tight fit between the first engaging portion 14 and the second engaging portion 40.

The hand lever 11 further includes a second rotating shaft 114. The elastic piece 113 is a torsion spring. The second rotating shaft 114 passes through the pressure bar 111 and the pull fastener 112. The torsion spring is sleeved outside the second rotating shaft 114, and the torsion spring has one end abutting against the pull fastener 112 and/or the first engaging portion 14 and the other end abutting against the pressure bar 111. The pull fastener 112 is rotatable relative to the pressure bar 111 around an axis of the second rotating shaft 114. When the first engaging portion 14 is engaged with the second engaging portion 40, the torsion spring is elastically deformed to store the elastic force.

To switch the hand lever 11 from the second position to the first position, the first joint 12 and the second joint 13 are closed together. The pressure bar 111 is pressed and rotated. When the pressure bar 111 is rotated to a certain position, the first engaging portion 14 connected to the pull fastener 112 is in contact with the second engaging portion 40. The pressure bar 111 is further pressed such that the pressure bar 111 exerts a force on the pull fastener 112. The pull fastener 112 compresses the torsion spring to elastically deform the torsion spring, such that the first engaging portion 14 is engaged with the second engaging portion 40.

In a specific embodiment, the pressure bar 111 is provided with a first limiting portion 1111 and a second limiting portion 1112 at an interval (FIG. 2), and the pull fastener 112 is provided with a matching portion 1122. A fitting groove 1123 (FIG. 5) runs through the matching portion 1122. The matching portion 1122 is positioned between the first limiting portion 1111 and the second limiting portion 1112. The second rotating shaft 114 passes through the first limiting portion 1111, the matching portion 1122, and the second limiting portion 1112 in sequence. The torsion spring is provided in the fitting groove 1123 and has one end abutting against the first engaging portion 14. It should be understood that, in other embodiments, the arrangement of the pressure bar 111, the pull fastener 112, the second rotating shaft 114, and the torsion spring may be realized in other ways, which is not limited herein.

Specifically, the first engaging portion 14 is a clamping hook, and the second engaging portion 40 is a clamping groove (FIGS. 2 and 4) or a clamping hook (FIGS. 5 and 6) provided on the first frame tube 20 or the second frame tube 30. In a specific embodiment, the hand lever 11 is hinged to the first joint 12, and the second engaging portion 40 is a clamping groove or a clamping hook provided on the second frame tube 30. Certainly, in other embodiments, the first engaging portion 14 may be a clamping groove, and the second engaging portion 40 may be a clamping hook, which is not limited herein.

Referring to FIGS. 3 and 7, in another embodiment, the pull fastener 112 is hinged to the pressure bar 111 through the second rotating shaft 114. The elastic piece 113 is an elastic sheet that abuts between the operation portion and the pressure bar 111. Specifically, the elastic piece is a V-shaped elastic piece with one end abutting against the operation portion and one end abutting against the pressure bar 111. More specifically, the operation portion and the pressure bar 111 are provided with a first groove and a second groove, respectively, and the two ends of the elastic sheet are provided with a first protrusion and a second protrusion, respectively. The first protrusion is accommodated in the first groove, and the second protrusion is accommodated in the second groove, such that the elastic sheet is firmly fixed to the operation portion and the pressure bar 111.

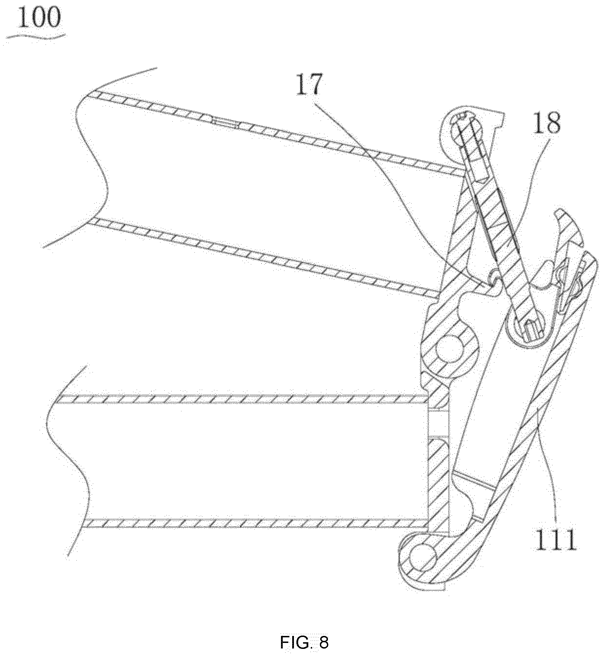

Referring to FIGS. 7 and 8, in an embodiment, the first joint 12 or the second joint 13 is provided with a third engaging portion 17. The third engaging portion 17 is engaged with the first engaging portion 14 to restrict the first joint 12 and the second joint to be in the separated position. In a specific embodiment, the second engaging portion 40 is connected to the second connecting member, and the third engaging portion 17 is provided on the second joint 13. The third engaging portion 17 is engaged with the first engaging portion 14 to restrict the first joint 12 and the second joint 13 to be in the separated position. Specifically, the third engaging portion 17 is a clamping hook or a clamping groove matched with the first engaging portion 14. When the third engaging portion 17 is a clamping hook protruding from a surface of the second joint 13, the first joint 12 is provided with an accommodating cavity 121 for accommodating the third engaging portion 17. When the first joint 12 and the second joint 13 are in the closed position, the clamping hook is accommodated in the accommodating cavity 121, such that the clamping hook will not interfere with the closing of the first joint 12 and the second joint 13.

To switch the hand lever 11 from the second position to the first position, the pull fastener 112 is held by hand to rotate relative to the pressure bar 111 to separate the first engaging portion 14 from the third engaging portion 17, and the pull fastener 112 exerts a force on the pressure bar 111 to drive the pressure bar 111 to rotate.

Referring to FIG. 3, in an embodiment, the folding joint further includes a connecting rod 18. The connecting rod 18 has one end hinged to the hand lever 11 and the other end hinged to a joint that is not hinged to the hand lever 11. Specifically, if the hand lever 11 is hinged to the first joint 12, the connecting rod 18 has one end hinged to the hand lever 11 and the other end hinged to the second joint 13 through a fourth rotating shaft 120. In this way, the first joint 12, the second joint 13, the hand lever 11, and the connecting rod 18 form a four-bar linkage structure. When the hand lever 11 is in the first position, the four-bar linkage structure restricts the first joint 12 and the second joint 13 to be in the closed position. When the hand lever 11 is in the second position, the four-bar linkage structure restricts the first joint 12 and the second joint 13 to be in the separated position.

Further, the connecting rod 18 is hinged to the pressure bar 111 through the second rotating shaft 114, that is, the pull fastener 112 shares the rotating shaft with the connecting rod 18. When the pull fastener 112 is rotated relative to the pressure bar 111, the connecting rod 18 is linked, which is convenient for operation. Of course, in other embodiments, the connecting rod 18 may also be hinged to the pressure bar 111, which is not limited herein.

Specifically, the folding joint 10 further includes a screw 130. The screw 130 passes through the connecting rod 18 to fixedly connect the connecting rod 18 to the fourth rotating shaft 120.

The folding frame 100 provided in the specific embodiment of the present disclosure works according to the following principle:
When the first frame tube 20 and the second frame tube 30 is switched from the folded state to the unfolded state:
The first joint 12 and the second joint 13 are switched from the separated position to be in the closed position. First, the pull fastener 112 is held by hand to rotate relative to the pressure bar 111, such that the first engaging portion 14 and the third engaging portion 17 are separated. The first joint 12 and the second joint 13 are closed together, and the four-bar linkage structure is rotated. The pressure bar 111 is pressed to rotate. When the pressure bar 111 rotates to a certain position, the first engaging portion 14 connected to the pull fastener 112 contacts with the second engaging portion 40. The pressure bar 111 is further pressed, such that the pressure bar 111 exerts a force on the pull fastener 112. The pull fastener 112 compresses the elastic piece to elastically deform the elastic piece, such that the first engaging portion 14 is engaged with the second engaging portion 40. The first locking portion 15 is locked with the second locking portion 16, and the first engaging portion 14 is clamped with the second engaging portion 40 under the action of the elastic force of the elastic piece.

When the first frame tube 20 and the second frame tube 30 is switched from the unfolded state to the folded state:
The pull fastener 112 is held by hand to compress the elastic piece and rotate relative to the pressure bar 111, such that the first engaging portion 14 is separated from the second engaging portion 40. The pull fastener 112 exerts a force on the pressure bar 111 to drive the pressure bar 111 to rotate, such that the first locking portion 15 and the second locking portion 16 are separated. In this way, the first joint 12 and the second joint 13 are switched from the closed position to be in the separated position. The four-link structure is rotated, and the first engaging portion 14 is engaged with the third engaging portion 17.

Another embodiment of the present disclosure further provides a folding joint 10 for the above-mentioned folding frame 100 of a folding bicycle. A first joint 12 of the folding joint 10 is connected to a first connecting member, and a second joint 13 of the folding joint 10 is connected to a second connecting member.

When the first joint 12 and the second joint 13 are in a closed position, a hand lever 11 is rotated to a first position adjacent to the first connecting member or the second connecting member, and the first connecting member and the second connecting member are in an unfolded state. When the first joint 12 and the second joint 13 are in a separated position, the hand lever 11 is rotated to a second position, and the first connecting member and the second connecting member are in a folded state. The hand lever 11 is provided with a first engaging portion 14. When the hand lever 11 is in the first position, the first engaging portion 14 is configured to engage with a second engaging portion 40 provided on the first connecting member or the second connecting member to restrict the first joint 12 and the second joint 13 to be in the closed position. Through the above arrangement, the hand lever 11 can be restricted to the first position by only engaging the first engaging portion 14 with the second engaging portion 40. To release the restriction on the hand lever 11, it is only necessary to separate the first engaging portion 14 from the second engaging portion 40. The present disclosure provides an easy-to-operate design and avoids the complicated operation of repeatedly rotating the movable stopper or the movable clamp ring relative to the frame tube to lock and unlock the hand lever 11 in the prior art.

The technical features of the above embodiments may be combined arbitrarily. For brevity, the description does not cover all possible combinations of the technical features of the above embodiments. However, all the combinations of the technical features should be construed as falling within the scope of the present disclosure if there is no contradiction.

The above embodiments are merely illustrative of several implementations of the present disclosure, and the description thereof is specific and detailed. However, these embodiments may not be construed as a limitation to the patentable scope of the present disclosure. It should be pointed out that several variations and improvements may be made by those of ordinary skill in the art without departing from the conception of the present disclosure, but such variations and improvements should fall within the protection scope of the present disclosure. Therefore, the patent protection scope of the present disclosure should be subject to the appended claims.

## Claims

1. A folding joint, comprising a hand lever, a first joint connected to a first connecting member, and a second joint connected to a second connecting member, wherein the hand lever is hinged to the first joint and/or the second joint; when the first joint and the second joint are in a closed position, the hand lever is rotated to a first position adjacent to the first connecting member or the second connecting member; and when the first joint and the second joint are in a separated position, the hand lever is rotated to a second position;
the hand lever comprises a pressure bar and a pull fastener; the pressure bar is hinged to the first joint and/or the second joint, and the pull fastener is hinged to the pressure bar; the pull fastener is provided with a first engaging portion; and when the hand lever is in the first position, the first engaging portion is configured to engage with a second engaging portion provided on the first connecting member or the second connecting member to restrict the first joint and the second joint to be in the closed position; and
when the hand lever is switched from the first position to the second position, the pull fastener is rotated relative to the pressure bar to separate the first engaging portion from the second engaging portion, and the pull fastener exerts a force on the pressure bar to drive the pressure bar to rotate.

2. The folding joint according to claim 1, wherein the hand lever further comprises an elastic piece, and the elastic piece is connected to the pressure bar and the pull fastener; and
when the first engaging portion is engaged with the second engaging portion, the elastic piece is elastically deformed to store an elastic force for engaging the first engaging portion with the second engaging portion.

3. The folding joint according to claim 2, wherein the hand lever further comprises a second rotating shaft; the elastic piece is a torsion spring; the second rotating shaft passes through the pressure bar and the pull fastener; and the torsion spring is sleeved outside the second rotating shaft, and the torsion spring has one end abutting against the pull fastener and/or the first engaging portion and the other end abutting against the pressure bar; and
the pull fastener is rotatable relative to the pressure bar around an axis of the second rotating shaft; and when the first engaging portion is engaged with the second engaging portion, the torsion spring is elastically deformed to store the elastic force.

4. The folding joint according to claim 3, wherein the pressure bar is provided with a first limiting portion and a second limiting portion at an interval, and the pull fastener is provided with a matching portion; a fitting groove runs through the matching portion, and the matching portion is positioned between the first limiting portion and the second limiting portion; the second rotating shaft passes through the first limiting portion, the matching portion and the second limiting portion in sequence; and the torsion spring is provided in the fitting groove and has one end abutting against the first engaging portion.

5. The folding joint according to claim 2, wherein the elastic piece is an elastic sheet; the pull fastener comprises a connection portion and an operation portion that are connected to each other; the connection portion is hinged to the pressure bar; the first engaging portion is provided on the operation portion; and the elastic sheet abuts between the operation portion and the pressure bar.

6. The folding joint according to claim 1, wherein the pull fastener comprises a connection portion and an operation portion that are connected to each other; the connection portion is hinged to the pressure bar; the first engaging portion is provided on the operation portion; and an avoidance position is formed between the connection portion and the operation portion for avoiding the pressure bar; and
when the first engaging portion is separated from the second engaging portion, a suspended end portion of the pressure bar extends into the avoidance position, and the pull fastener exerts a force on the pressure bar through a wall of the avoidance position to drive the pressure bar to rotate.

7. The folding joint according to claim 1, wherein the first engaging portion is a clamping hook or a clamping groove matched with the second engaging portion.

8. The folding joint according to any one of claims 1 to 7, wherein the first joint or the second joint is provided with a third engaging portion; the first engaging portion is engaged with the third engaging portion to restrict the first joint and the second joint to be in the separated position; and when the hand lever is switched from the second position to the first position, the pull fastener is rotated relative to the pressure bar to separate the first engaging portion from the third engaging portion, and the pull fastener exerts a force on the pressure bar to drive the pressure bar to rotate.

9. The folding joint according to any one of claims 1 to 7, wherein the first joint is hinged to one end of the second joint away from the hand lever, and the hand lever is hinged to one of the first joint and the second joint; the folding joint further comprises a connecting rod; and the connecting rod has one end hinged to the hand lever and the other end hinged to the other of the first joint and the second joint.

10. A folding bicycle frame, comprising a first connecting member, a second connecting member, and the folding joint according to any one of claims 1 to 9, wherein the first connecting member is a first frame tube, and the second connecting member is a second frame tube; and the second engaging portion is provided on the first frame tube or the second frame tube.
